# EUROPÄISCHE PATENTSCHRIFT

(11) **EP 1 722 199 B1**
(45) Veröffentlichungstag und Bekanntmachung des Hinweises auf die Patenterteilung: **11.07.2007**
(21) Anmeldenummer: 05090125.5
(22) Anmeldetag: 09.05.2005
(51) Int. Cl.: G01D 5/20, G06M 1/27

(54) **Energetisch autarker, nicht manipulierbarer Laufleistungszähler zur Aufzeichnung der Gesamtlaufzeit und des Motorverschleisses eines Verbrennungsmotors der in dem Motorblock integriert ist.**
Self energetized, tamper-proof running time counter for determination of the total running time and of the wear of a IC-engine which is integrated in the motor block.
Comteur kilometrique autoalimenté et non manipulable, pour la determination du nombre total de tours et de l'usure d'un moteur à combustion interne, integré au bloc moteur.

(43) Veröffentlichungstag der Anmeldung: 15.11.2006
(73) Patentinhaber: Uwe Kuhring, 28757 Bremen (DE)
(72) Erfinder: Uwe Kuhring, 28757 Bremen (DE)

(56) Entgegenhaltungen:
- EP-A- 0 393 236
- DE-U1- 20 014 262
- FR-A- 2 700 225
- GB-A- 2 138 609

## Beschreibung

Die Erfindung bezieht sich auf eine Schaltungsanordnung für die unzugängliche und damit nicht manipulierbare, feste Integration in den Motorblock eines Verbrennungsmotors mit Energieversorgung aus einer in der Nähe der Kurbelwelle des Motors angeordneten, durch einen oder mehrere auf einer Erregerscheibe auf der Kurbelwelle platzierten Permanentmagneten erregten Induktionsspule, wobei diese Schaltungsanordnung in der Hauptsache einen quarzgesteuerten, mit einer stabilisierten, über eine Gleichrichterdiode aus der Induktionsspule erzeugten Gleichspannung betriebenen Mikrocontroller zur Feststellung der Laufleistung des Motors und wahlweise der Motorumdrehungen und zur Ansteuerung eines außerhalb des Motorblocks befindlichen, mit Stecker über eine am Motorblock befindliche Anschlussbuchse aufsteckbaren Displays zur Visualisierung der ermittelten Daten beinhaltet, welcher somit unabhängig von externen Energie- oder Informationsquellen des Motors betrieben wird.

Es sind bereits verschiedene Arten von Apparaturen zur Bestimmung der Gesamtlaufleistung eines Verbrennungsmotors bekannt, wie zum Beispiel Kilometerzähler, Wegstreckenmesser oder Betriebsstundenzähler, die aber den Nachteil der Zugänglichkeit von außen und somit der Manipulierbarkeit aufweisen. Dieses aktuelle Problem der vielfältigen Manipulierbarkeit der bisherigen Methoden zur Feststellung der Gesamtlaufleistung eines Fahrzeugs ist beispielhaft in den Fachartikeln von Anne Hahn, Die Tacho-Betrüger, ADACmotorwelt 4/2005, S. 12 ff., und von Detlef Grell, Tacho-Tüfteln, Was tun gegen die Kilometerstandfälscher, c't 8/05, S. 78 ff., beschrieben. Die in diesen Fachartikeln dargelegten Vorrichtungen zur Wegstreckenmessung nach dem aktuellen Stand der Technik sind insofern immer manipulierbar, als es sich um externe, also außerhalb des Motorblocks befindliche Geräte zur Laufleistungszählung handelt, die über eine externe Stromversorgung verfügen und mittels Datenübertragung mit dem Motor oder anderen Teilen des Fahrzeugs verbunden sind oder mechanisch funktionieren. Die Möglichkeiten zur Manipulation sind somit vielfältig und umfassen eine direkte Manipulation am Gerät, eine Unterbrechung der Stromversorgung oder eine Beeinflussung der Datenleitung. Aufgrund dieser immer häufiger vorgenommenen Manipulationen ist die zuverlässige Aussagekraft eines der grundlegenden Kriterien zur Bestimmung der Gesamtlaufleistung des Motors und damit des Fahrzeugwertes nicht mehr gegeben.

Ziel der vorliegenden Erfindung ist es, dieses Problem, für das mangels einer bisherigen technischen Lösung nun der gesetzliche Weg beschritten werden soll, wie dies beispielhaft in den Fachartikeln von Peter-Michael Ziegler, Tacho-Manipulation wird zur Straftat, c't 10/05, S. 64, und von Anne Hahn, Aus für Tacho-Trickser, ADACmotorwelt 5/2005, S. 42, beschrieben ist, auf technischem Wege wirksam zu lösen, indem die Manipulationsmöglichkeiten durch Unterbrechung der Stromzufuhr oder Manipulationsmöglichkeiten bei der Datenübermittlung bzw. am Kilometerzähler, Wegstreckenmesser oder Betriebsstundenzähler selbst verhindert und so eine nicht manipulierbare Ermittlung der Laufleistung des Motors ermöglicht wird. Der derzeitige Stand der Technik weist das Problem auf, dass die Laufleistung von Fahrzeugen nur unzureichend, nämlich indirekt ermittelt wird. Als einziges Kriterium zur Bestimmung der Laufleistung eines Motors und damit in der Regel der des gesamten Fahrzeugs wird nach dem Stand der Technik der Stand des Kilometerzählers im Tachometer bzw. des Betriebsstundenzählers herangezogen. Nach dem Stand der Technik ist es jedoch sehr leicht, den Kilometerzähler, Wegstreckenmesser oder Betriebsstundenzähler zu manipulieren oder auszutauschen (siehe die oben genannten Fundstellen zum einschlägigen Stand der Technik). Die Erfindung bietet eine effiziente Lösung zur Beseitigung dieser Probleme.

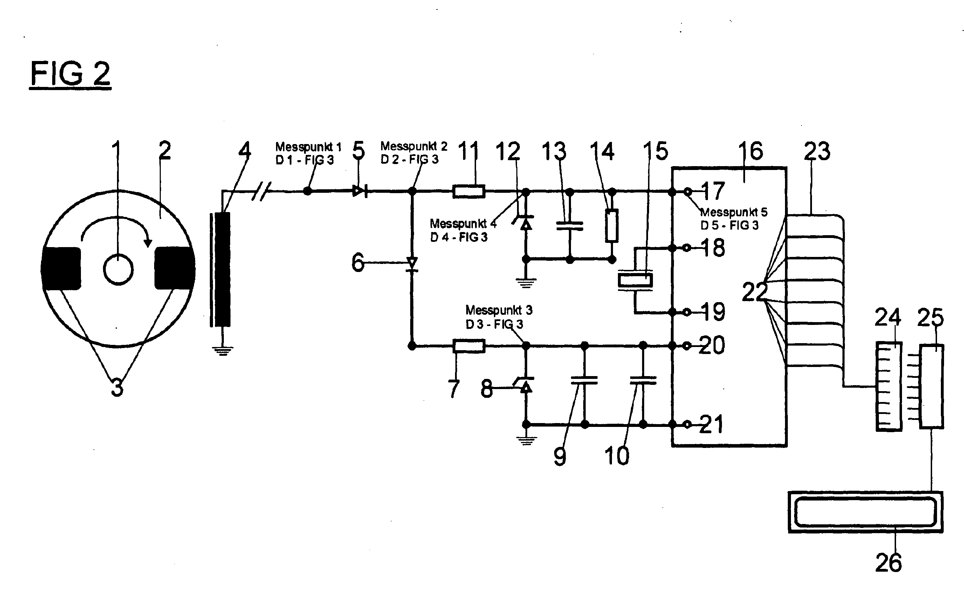

Die Lösung dieser oben ausgeführten Probleme und damit das Ziel dieser Erfindung bestehen darin, dass die Ermittlung der Laufzeit des Motors abgekapselt im Motorblock vollzogen wird und somit von außen in keiner Weise beeinflussbar ist. Manipulationsversuche bleiben somit auf die mit ganz erheblichem und wesentlich höherem Aufwand als nach dem aktuellen Stand der Technik verbundene völlige Zerlegung des Motors und den Austausch der Schaltungsanordnung beschränkt. Da im Mikrocontroller 16 - FIG 2 der Schaltungsanordnung dieser Erfindung eine dem jeweiligen Fahrzeug eindeutig zuordenbare Identifikationsnummer gespeichert werden kann, bestehen darüber hinaus für den Gesetzgeber sicherere Möglichkeiten, einen Betrugstatbestand festzustellen. Insbesondere ist es mit dieser Erfindung nicht möglich, eine einmal ermittelte Laufzeit zurückzustellen oder den Zählerstand überlaufen und somit wieder bei Null beginnen zu lassen, weil das interne Zählprogramm mit dem Erreichen des höchstmöglichen Zählerstandes das weitere Aufsummieren von ermittelten Zahlenwerten beendet und daher keinen Überlauf vornimmt. Lediglich die Visualisierung der Daten erfolgt außerhalb des Motorgehäuses. Somit kann diese Erfindung als verlässliches Hilfsmittel zur Ermittlung des aktuellen Fahrzeugwertes sicher herangezogen werden. Die durch die Erfindung ermittelte Laufzeit des Motors ist außerdem ein aussagekräftigerer Beleg für den Abnutzungsgrad des Motors, da im Gegensatz zu Kilometerzählern nach dem derzeitigen Stand der Technik die Betriebszeiten des Fahrzeugs im Standgas mit eingerechnet werden und somit eine genauere Ermittlung der Betriebsdauer insgesamt erfolgt. Insbesondere die Kombination von Kilometerstand und Betriebsstundenanzeige ermöglicht einen Einblick in die jeweilige Nutzungsweise des Fahrzeugs und gibt Auskunft darüber, ob der Kilometerstand mit den beispielsweise beim Gebrauchtwagenangebot gemachten Angaben plausibel nachvollziehbar ist oder nicht bzw. ob dieser manipuliert wurde oder nicht. Für eine unterschiedliche Nutzungsweise seien hier beispielhaft ein Gebrauchtwagen, der als Taxi vorwiegend für Stadtfahrten eingesetzt wurde, und ein Gebrauchtwagen, der als Dienstwagen überwiegend für Autobahnfahrten genutzt wurde, genannt. Wahlweise in die Erfindung integriert ist die Ermittlung des Verschleißgrades des Motors anhand der mit der Motordrehzahl gewichteten, über die gesamte Betriebsdauer des Motors aufsummierten Laufzeit. Da in dem Ausführungsbeispiel der Erfindung nach FIG 2 über die Induktionsspule 4 Spannungsimpulse beim Passieren der SmCo-Permanentmagneten 3 erzeugt werden, kann in Kenntnis der Zahl der Magneten auf der Erregerscheibe 2 jederzeit die Umdrehungszahl der Kurbelwelle 1 ermittelt werden. Dadurch wird es möglich, zusätzlich sowohl einerseits die Drehzahl des Motors anzuzeigen als auch andererseits eine mit der Drehzahl des Motors gewichtete Nutzungsdauer des Motors zu ermitteln. Das Ergebnis ist nicht mehr nur die reine Betriebsdauer des Motors, sondern, da hier die Drehzahl über die Zeit integriert wird, eine Art absoluter Verschleißindex. Damit wird zusätzlich zur Ermittlung der Gesamtlaufzeit des Motors die Gesamtzahl der Umdrehungen des Motors über die gesamte Laufzeit des Motors ermittelt. Speziell in dieser optionalen Ausführung mit Ermittlung der Motorumdrehungen bietet die Erfindung neben der Verlässlichkeit der Aussagekraft der ermittelten Gesamtlaufleistung des Motors somit auch einen viel genaueren Indikator für die eigentliche Abnutzung des Motors als ein Betriebsstundenzähler oder Kilometerzähler.

Zum Stand der Technik gehören gemäß dem Dokument FR-A-2 700 225 vom 8. Juli 1994 (Dokument D1) bereits Verfahren zur Ermittlung und Aufzeichnung der Laufleistung eines Verbrennungsmotors hinsichtlich seiner gesamten Betriebsdauer und der über die Gesamtmotorlaufzeit gemessenen Motorumdrehungen für eine gleichzeitige Motorverschleißermittlung, wobei auf einer Kurbelwelle rotierende Permanentmagneten angeordnet sind, die in einer Induktionsspule die Information über die Drehzahl des Motors für die Schaltplatine generieren, und ein externes Display integriert ist, das zur Visualisierung der ermittelten Daten durch die Schaltplatine angesteuert wird.

Die mit der vorliegenden Erfindung zu lösende Aufgabe besteht nun darin, ein Verfahren zur Ermittlung der Laufleistung eines Verbrennungsmotors gemäß Dokument D1 zu schaffen, das nicht manipulierbar ist. Dies wird durch die Anordnung einer von außen unzugänglichen, lediglich Ausgangssignale erzeugenden Schaltplatine innerhalb des Motorblocks unter Verwendung einer von außerhalb des Motorblocks unabhängigen Energieversorgung erreicht, wobei die Schaltplatine einerseits vom Motorblock und andererseits von den sich im Motorblock befindlichen Flüssigkeiten und Gasen thermisch isoliert ist und durch eine Kühlvorrichtung die von ihr erzeugte Wärme sowie die die Isolierung durchdringende Wärme an die Umgebung außerhalb des Motorblocks abführt und wobei auf der Kurbelwelle angeordnete Permanentmagneten in einer Induktionsspule die Versorgungsspannung in Form einer Wechselspannung motordrehzahlabhängiger Frequenz generieren. Solche energieautarken induktiven Drehzahlsensoren, bei denen die Versorgungsspannung von der Induktionsspule und den Permanentmagneten erzeugt wird, sind gemäß dem Dokument DE 200 14 262 U1 vom 19. April 2001 (Dokument D2) und dem Dokument GB-A-2 138 609 vom 24. Oktober 1984 (Dokument D3) bereits Stand der Technik, weisen aber im Unterschied zur vorliegenden Erfindung keine Schaltplatine auf, die innerhalb des Motorblocks angeordnet ist.

Eine Schaltungsanordnung zur technischen Umsetzung eines Verfahrens zur Ermittlung und Aufzeichnung der Laufleistung eines Verbrennungsmotors, welche einen induktiven Sensor und eine Gleichrichterdiode umfasst, gehören gemäß dem Dokument D2 ebenfalls zum Stand der Technik, wobei die Gleichrichterdiode die von einer Induktionsspule erzeugte Wechselspannung motordrehzahlabhängiger Frequenz in eine pulsierende Gleichspannung umwandelt und wobei die pulsierende Gleichspannung einerseits als positive Versorgungsspannung für einen Mikrocontroller dient und andererseits eine Teilgruppe elektronischer Bauteile ansteuert, welche einen in ein Rechtecksignal umwandelbaren, mit der Motordrehzahl gekoppelten Spannungsverlauf erzeugt und diesen in einen Schmitt-Trigger-Eingang des Mikrocontrollers einspeist.

Hinsichtlich der Schaltungsanordnung besteht die erfindungsgemäß zu lösende Aufgabe darin, eine Schaltungsanordnung zur Ermittlung der Laufleistung eines Verbrennungsmotors gemäß dem Dokument D2 zu schaffen, die nicht manipulierbar ist. Zu diesem Zweck ist die Schaltungsanordnung der vorliegenden Erfindung in einen Motorblock integriert und umfasst eine auf der Kurbelwelle rotierende mit Permanentmagneten bestückte Erregerscheibe, die in einer in ihrer Nähe angeordneten Induktionsspule eine Wechselspannung motordrehzahlabhängiger Frequenz erzeugt, sowie einen mit den Oszillatoranschlüssen des Mikrocontrollers verbundenen Quarz, mit dessen Hilfe der Mikrocontroller ein internes, zeitkonstantes Taktsignal erzeugt, wobei außerdem ein externes Display vorgesehen ist, an das die durch die Ausgänge des Mikrocontrollers über die Verbindungsleitungen sowie die Kombination aus Anschlussbuchse und Stecker übermittelten Daten übertragen werden und auf dem diese Daten visualisiert werden.

Die Verwendung einer mit Permanentmagneten bestückten Erregerscheibe in einem induktiven Drehzahlsensor, welche in einer Induktionsspule eine Wechselspannung motordrehzahlabhängiger Frequenz erzeugt, gehört gemäß dem Dokument D1 ebenso zum Stand der Technik wie die fachübliche Verwendung eines Quarzes, der mit den Oszillatoranschlüssen des Mikrocontrollers verbunden ist und mit dessen Hilfe der Mikrocontroller ein internes, zeitkonstantes Taktsignal erzeugt. Das Dokument D1 beschreibt eine Sensoranordnung zur Ermittlung der Laufleistung eines Verbrennungsmotors, bei der ein externes Display angeordnet wird, an das die durch die Ausgänge des Mikrocontrollers über die Verbindungsleitungen sowie die Kombination aus Anschlussbuchse und Stecker übermittelten Daten übertragen und auf dem diese Daten visualisiert werden. Das auch zum Stand der Technik gehörende Dokument D3 beschreibt einen energieautarken induktiven Drehzahlsensor, bei dem die Versorgungsspannung durch eine Induktionsspule und einen Permanentmagneten generiert wird. Im Unterschied zu den Dokumenten D1 und D3 ist die Schaltungsanordnung der vorliegenden Erfindung jedoch in einen Motorblock integriert.

Erfindungsgemäß umfasst die Schaltungsanordnung außerdem eine Isolierung, die sie einerseits vom Motorblock und andererseits von den sich im Motorblock befindlichen Flüssigkeiten und Gasen thermisch isoliert, sowie eine Kühlvorrichtung, welche die von der Schaltungsanordnung erzeugte Wärme sowie die die Isolierung durchdringende Wärme an die Umgebung außerhalb des Motorblocks abführt.

Für die Erreichung des Ziels dieser Erfindung wird eine von außen unzugängliche und lediglich Ausgangssignale erzeugende Schaltungsanordnung zur Ermittlung der Gesamtmotorlaufleistung und der Motordrehzahl in einen Motorblock integriert, die den im Folgenden skizzierten besonderen Anforderungen hinsichtlich der Umgebungstemperatur, der Versorgungsspannung und des EEPROM-Speichers im Mikrocontroller 16 - FIG 2 genügt. Laut den Angaben verschiedener Fahrzeughersteller und fernmündlich erteilter Auskunft von DaimlerChrysler liegt die in einem Verbrennungsmotor herrschende Umgebungstemperatur üblicherweise bei 125°C. Diese Temperatur entspricht exakt der maximalen Betriebstemperatur von Mikrocontrollern, die dem Stand der Technik entsprechen und den "Extended Industrial Standard" erfüllen. Da keine exakte Umgebungstemperaturangabe vorliegt und deshalb im Einzelfall auch von höheren Temperaturen im Motorraum auszugehen ist, die maximale Betriebstemperatur des in der Schaltungsanordnung der Erfindung verwendeten Mikrocontrollers und der Kondensatoren aber laut Hersteller mit exakt 125°C angegeben wird, ist eine Kühlung der Schaltungsanordnung erforderlich. Zum Einsatz kommt daher eine passive Kühlung, die Wärme aus dem Innenraum des Motorblocks nach außen abführt. Weil die Schaltungsanordnung selbst nur einen sehr geringen Leistungsbedarf hat, erzeugt sie im Vergleich zu den erheblichen Umgebungstemperaturen im Motorblock selbst keine nennenswerte Wärmemenge. Deshalb ist die abgeführte Wärmemenge und damit die Temperatur, auf die die Schaltungsanordnung in ihrer jeweiligen Ausführung abgestimmt werden kann, allein abhängig von den als Wärmeisolator und als Wärmeleiter eingesetzten Materialien. Hinsichtlich der Versorgungsspannung der Schaltungsanordnung, die direkt im Innenraum des Motorblocks durch die sich drehende Kurbelwelle erzeugt wird, muss der Gefahr der unvollständigen Datenaufzeichnung vorgebeugt werden, die dadurch zustande kommen kann, dass die Versorgungsspannung abrupt zusammenbricht, sobald die Kurbelwelle zum Stillstand kommt, und damit auch die Programmausführung im Mikrocontroller abrupt abbricht. Da der Mikrocontroller in seinem EEPROM aktuelle Zählerstände der Betriebsdauer und der ermittelten Motorlaufzeitdaten speichern muss, um bei einem späteren Neustart des Motors auf diese bereits ermittelten Daten zurückgreifen zu können, und diese Daten nicht in einem Schreibzugriff gespeichert werden können, besteht die Gefahr, dass die Programmausführung während der Datenspeicherung abbricht. In dem dargelegten Ausführungsbeispiel dieser Erfindung kommt zur Lösung dieses Problems eine Programmierung zum Einsatz, welche fehlertolerant gegenüber einer abrupten Beendigung der Programmausführung ist und nicht die mit einer Sicherung der Versorgungsspannung des Mikrocontrollers 16 - FIG 2 als Problemlösung einhergehenden Nachteile aufweist, die darin bestehen, dass eine ausreichend lange Pufferung über hochkapazitive Kondensatoren zwar ermöglicht, dass alle Schreibzugriffe vollständig abgeschlossen werden können, aber eine permanente Überwachung der Versorgungsspannung des Mikrocontrollers erforderlich macht, um ihren drohenden Zusammenbruch frühzeitig zu erkennen und das Schreiben der Daten sofort einzuleiten. Da jedoch zur exakten Messung von Spannungen Mikrocontroller, die dem Stand der Technik entsprechen, eine genaue Referenzspannung benötigen, würde dieses Verfahren eine erheblich aufwändigere Schaltungsanordnung erforderlich machen. Ein weiterer Vorteil des dargelegten Ausführungsbeispiels der Erfindung besteht darin, dass ein endgültiger und unwiederbringlicher Datenverlust, wie sich dieser beim Auftreten eines Fehlers während eines Datenschreibvorgangs bei einer bloßen ausreichend langen Pufferung ergeben würde, verhindert wird und die Schaltungsanordnung ihre Funktion auch bei Fehlern während des Datenschreibvorgangs aufrecht erhält. Zur Sicherung der Versorgungsspannung wären außerdem Kondensatoren einer im Vergleich zu den übrigen Bauteilen der Schaltungsanordnung dieser Erfindung erheblichen Größe notwendig, denn das Schreiben des EEPROMS nimmt beträchtlich mehr Zeit in Anspruch als andere Befehle des Mikrocontrollers und die zu diesem Zweck erforderlichen Kondensatoren lägen am Rande der Leistungsfähigkeit von Folienkondensatoren bzw. Mehrschichtkondensatoren nach dem Stand der Technik.

Elektrolyt- bzw. Tantalkondensatoren können aufgrund der hohen, in der Schaltungsanordnung auftretenden Temperaturen nicht eingesetzt werden, auch wenn es Kondensatoren diesen Typs gibt, die einem Temperaturbereich von 125°C standhalten, denn sie sind bei steigenden Temperaturen einer erheblichen Reduzierung ihrer Lebensdauer unterworfen, so dass die notwendige Betriebssicherheit der Schaltungsanordnung über die gesamte Lebensdauer eines Verbrennungsmotors nach dem Stand der Technik damit nicht gewährleistet werden könnte. Im dargelegten Ausführungsbeispiel der Schaltungsanordnung wird dieses Problem dadurch gelöst, dass in regelmäßigen Abständen von 18 Sekunden die ermittelten Daten doppelt in das EEPROM geschrieben werden. Beim Neustart des Motors und somit des Mikrocontrollers liest der Mikrocontroller zunächst die von der Schaltungsanordnung fehlerfrei, d.h. mit jeweils eindeutig übereinstimmenden Zahlenwertepaaren aus dem doppelten Schreibvorgang, gespeicherten höchsten Zählerstände, die sich nur aufsteigend verändern können, und ermittelt somit den jeweils aktuellsten gültigen Stand der Zähler für die Laufzeit und die Umdrehungen. Bei diesem Lesevorgang wird überprüft, ob die Daten des ersten und des zweiten Speichervorgangs vollständig identisch sind, was nur dann der Fall sein kann, wenn beide Datenspeichervorgänge erfolgreich abgeschlossen wurden. Unvollständige, nicht übereinstimmende oder fehlerhaft abwegige, eventuell durch defekte EEPROM-Zellen hervorgerufene Zählerstände werden deshalb bei der Datenermittlung ignoriert. Ein weiterer Vorteil dieses Ausführungsbeispiels der Schaltungsanordnung ist deshalb die zusätzlich bestehende Fehlertoleranz gegenüber dem Ausfall einzelner EEPROM-Zellen. Hinsichtlich des EEPROM-Speichers wird mit der Schaltungsanordnung entsprechend dem dargelegten Ausführungsbeispiel eine rechnerische EEPROM-Mindestlebensdauer von 80.000 Betriebsstunden (16 Millionen x 18 Sekunden) gewährleistet, was in etwa 9 Jahren Dauerbetrieb des Motors entspricht. Die Hersteller garantieren 1 Million Schreibzugriffe auf jede Speicherzelle des EEPROMs bei typischerweise 10 Millionen Schreibzugriffen. Üblicherweise verfügen die für den Einbau in die Schaltungsanordnung geeigneten Mikrocontroller über einen EEPROM-Speicher von 256 Bytes. Bei 256 Bytes und 16 Bytes pro Schreibvorgang, die sich aus 2 x 8 Bytes zusammensetzen, welche wiederum aus den beiden Zählerständen für die Laufzeit und für die Umdrehungen von je 4 Bytes bestehen, sind bei optimaler Ausnutzung des gesamten EEPROMs 16 Millionen Schreibvorgänge je Zähler garantiert. Im Ausführungsbeispiel erfolgt 1 Schreibzugriff alle 18 Sekunden. Das EEPROM wird von der zugehörigen Software nach den höchsten fehlerfreien Zählerständen für die Laufzeit und die Umdrehungen durchsucht, sobald der Motor gestartet wird und der Mikrocontroller 16 - FIG 2 die Software zur Ermittlung der aktuellen Zählerstände startet. Die Software misst die Zeit, indem sie einerseits die Konstanz des Taktsignals von 4 MHz und andererseits den Umstand berücksichtigt, dass die Ausführungszeit von Befehlen bekannt und genau vorgegeben ist. Mit Hilfe der so ermittelten Zeitbasis wird über den Schmitt-Trigger-Eingang 17 - FIG 2 die Drehzahl des Motors ermittelt und über die gesamte Lebenszeit des Motors aufsummiert. In diesem Ausführungsbeispiel speichert die Software die jeweils gültigen Zählerstande in regelmäßigen Abständen von 18 Sekunden im EEPROM ab. Die Laufzeit des Motors wird somit mit einer Auflösung von 18 Sekunden ermittelt und in einem 4 Bytes großen Speicherbereich des EEPROMs gespeichert. Da in einem 4 Bytes großen Speicherbereich Zahlen zwischen 0 und 4.294.967.295 gespeichert werden können, ergibt sich bei einer Auflösung der Laufzeitermittlung von 18 Sekunden rein rechnerisch eine maximale Laufzeitaufzeichnungsdauer von 2.450 Jahren. Die Gesamtdrehzahl wird in diesem Ausführungsbeispiel in einer 4 Bytes großen Zahl gespeichert. Da in einem 4 Bytes großen Speicherbereich Zahlen zwischen 0 und 4.294.967.295 gespeichert werden können, ergibt sich bei einer ständigen Umdrehungszahl von 20.000 pro Minute und einer Auflösung von 100 Umdrehungen eine maximale Laufzeit von 40 Jahren, bis der Zähler den maximal möglichen Zahlenwert erreicht hat und somit erschöpft ist. Neben der Ermittlung der Laufzeit und der Umdrehungszahl vollzieht die Software in regelmäßigen Abständen, in diesem Ausführungsbeispiel alle 18 Sekunden, die Speicherung der Zählerstände im EEPROM. Kürzere Schreibzyklen sind mit EEPROMs mit mehr als 1 Million garantierten Schreibzugriffen oder größerem EEPROM-Speicher möglich oder lassen sich in diesem Ausführungsbeispiel bei entsprechender Verringerung der garantierten 80.000 Betriebsstunden realisieren. Die Software steuert außerdem das Display zur Visualisierung der Zählerstände für die Laufzeit und die Umdrehungen an. Erfindungsgemäß können auf dem externen Display optional auch weitere im Motorraum ermittelte Messdaten angezeigt werden, wie Ölstand, Öltemperatur und Ölqualität, wobei der Mikrocontroller dazu mit entsprechenden fachüblichen Messfühlern zur Ermittlung dieser Messdaten auszustatten ist und die im Mikrocontroller integrierte Software die Daten der Messfühler auswertet.

Im Folgenden wird die Erfindung anhand eines Ausführungsbeispiels und mit Bezug auf die beigefügten Zeichnungen FIG 1, FIG 2 und FIG 3 beschrieben, in denen ein Längsschnitt der in einen Motorblock integrierten kompletten Schaltungsanordnung samt Verkabelung, Isolierung und Kühlung (FIG 1), ein Schaltplan der in einen Motorblock integrierbaren Schaltungsanordnung (FIG 2) und Diagramme zur Darlegung der Spannung über die Zeit (U von T) an verschiedenen Messpunkten innerhalb der Schaltungsanordnung (FIG 3) dargestellt sind.

Wie aus den vorstehend genannten Zeichnungen ersichtlich ist, umfasst die Erfindung ein Verfahren und eine Vorrichtung zur energetisch autarken, nicht manipulierbaren, aufsummierenden Laufleistungsmessung zur Aufzeichnung der Gesamtlaufzeit eines Verbrennungsmotors für die Integration in einen Motorblock mit wahlweise gleichzeitiger Motorverschleißermittlung anhand der über die Gesamtmotorlaufzeit gemessenen Motorumdrehungen.

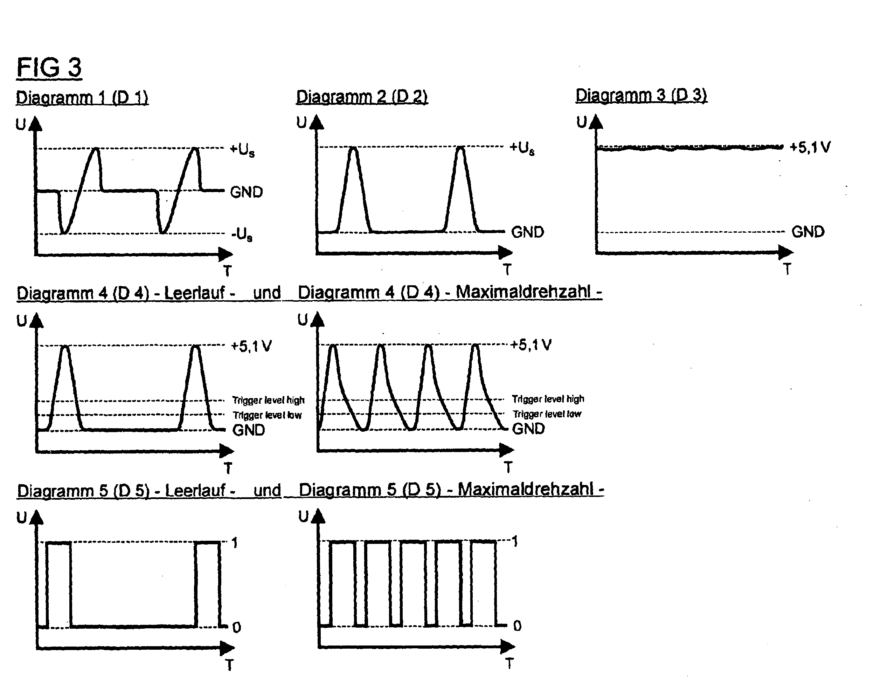

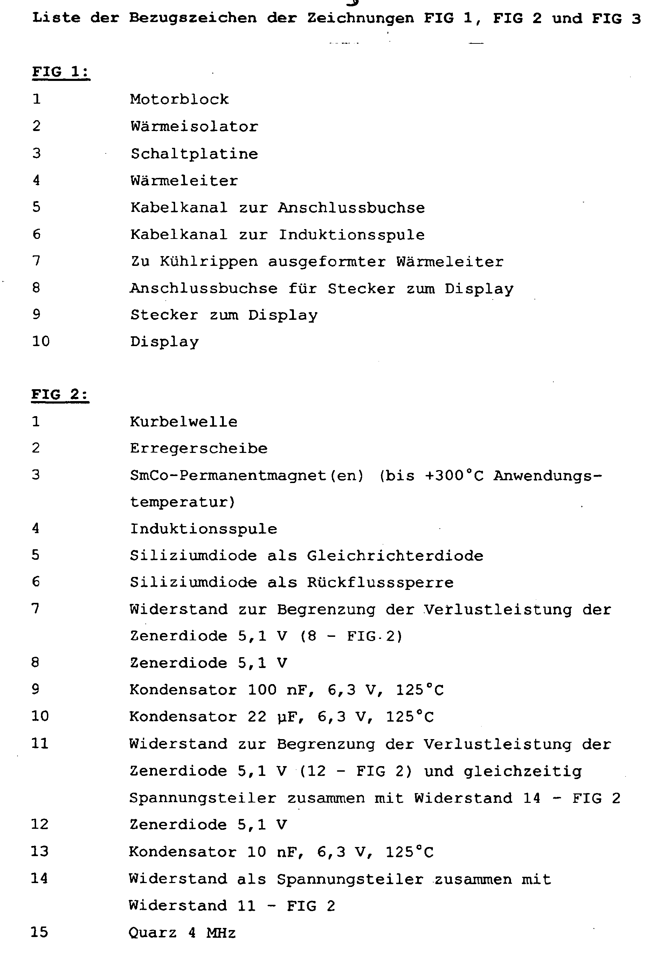

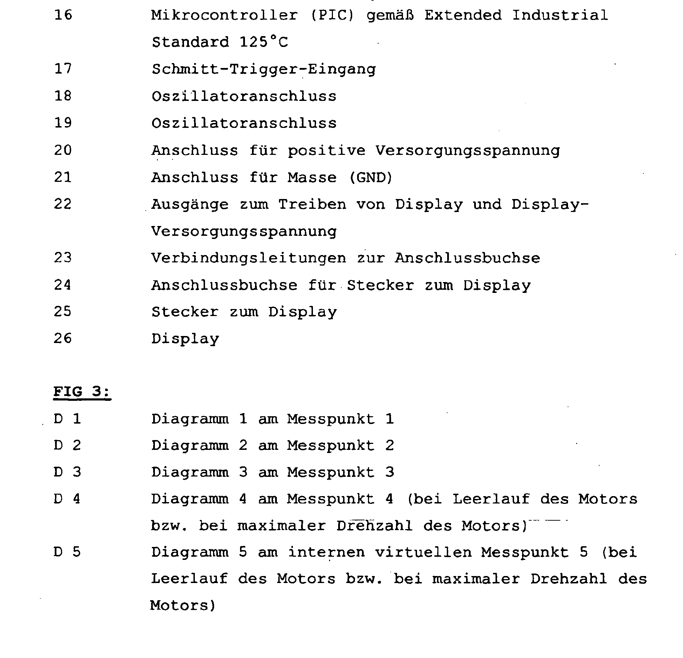

Die Schaltungsanordnung nach FIG 2 enthält eine auf der Kurbelwelle 1 sitzende Erregerscheibe 2, die bei laufendem Motor rotiert und in der Induktionsspule 4 durch die in die Erregerscheibe 2 integrierten SmCo-Permanentmagneten 3 eine Wechselspannung D 1 - FIG 3 mit variabler Frequenz in Abhängigkeit von der wechselnden Drehzahl des Motors erzeugt. Die Wechselspannung wird über die Siliziumdiode 5, die als Gleichrichterdiode verwandt wird, in eine pulsierende

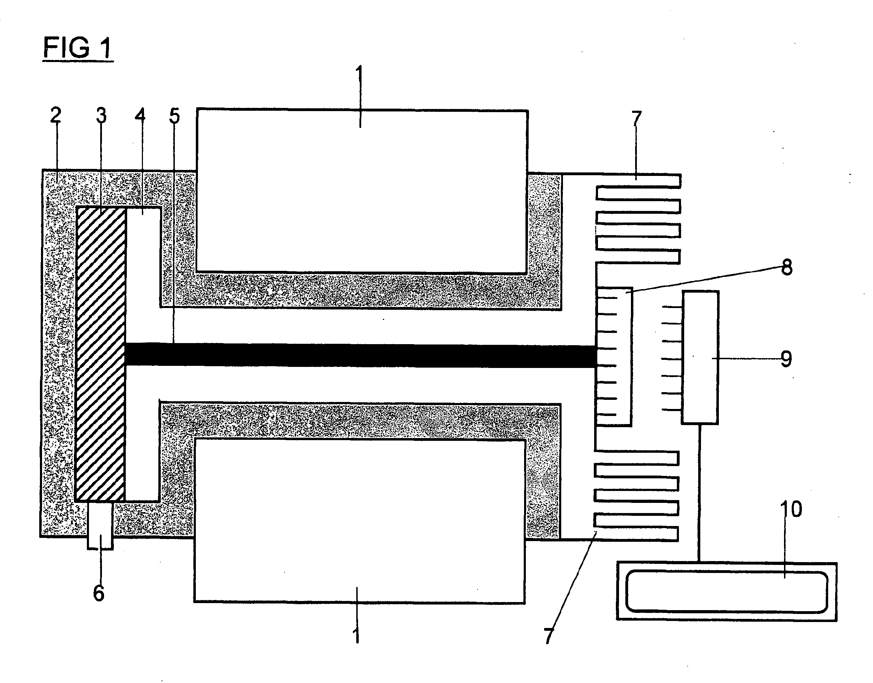

Gleichspannung D 2 - FIG 3 umgewandelt, welche zwei unterschiedliche Teilgruppen der Schaltungsanordnung mit Spannung versorgt, nämlich die Teilgruppe 6 bis 10, bestehend aus Siliziumdiode 6, die als Rückflusssperre verwandt wird, Widerstand 7 zur Begrenzung der Verlustleistung der Zenerdiode 8, Zenerdiode 8 und den Kondensatoren 9 und 10, sowie die Teilgruppe 11 bis 14, bestehend aus Widerstand 11 zur Begrenzung der Verlustleistung der Zenerdiode 12, Zenerdiode 12, Kondensator 13 und Widerstand 14 als Spannungsteiler. Die Teilgruppe 6 bis 10 erzeugt eine auf 5,1 V beschränkte Gleichspannung mit geringer Restwelligkeit D 3 - FIG 3. Die Siliziumdiode 6 verhindert eine Überlagerung der durch die Teilgruppe 6 bis 10 erzeugten Gleichspannung auf den Schmitt-Trigger-Eingang 17 des Mikrocontrollers 16. Der Widerstand 7 dient zur Begrenzung der Verlustleistung der Zenerdiode 8. Die Zenerdiode 8 begrenzt die durch die Teilgruppe 6 bis 10 erzeugte Gleichspannung auf 5,1 V. Der Kondensator 9 puffert die beim Betrieb der Zenerdiode 8 entstehenden Störsignale. Der Kondensator 10 puffert die zum Betrieb des Mikrocontrollers 16 benötigte Versorgungsspannung. Die Teilgruppe 11 bis 14 erzeugt am Schmitt-Trigger-Eingang 17 einen in ein Rechtecksignal umwandelbaren Spannungsverlauf D 4 - FIG 3, dessen Frequenz an die Motordrehzahl gekoppelt ist. Der Widerstand 11 dient zur Begrenzung der Verlustleistung der Zenerdiode 12 und bildet gleichzeitig zusammen mit Widerstand 14 einen Spannungsteiler. Die Zenerdiode 12 begrenzt die durch die Teilgruppe 11 bis 14 erzeugte Spannung auf 5,1 V. Der Kondensator 13 puffert die beim Betrieb der Zenerdiode 12 entstehenden Störsignale. Der Widerstand 14 arbeitet als Spannungsteiler zusammen mit Widerstand 11. Der Quarz 15 sorgt dafür, dass der Mikrocontroller 16 mit einer Frequenz von 4 MHz getaktet wird. Über den Schmitt-Trigger-Eingang 17 erzeugt der Mikrocontroller 16 aus dem am Schmitt-Trigger-Eingang 17 anliegenden Spannungsverlauf D 4 - FIG 3 ein internes Rechtecksignal D5 - FIG 3, mit Hilfe dessen die momentane Drehzahl des Motors berechnet werden kann. Zwischen den Oszillatoranschlüssen 18 und 19 erzeugt der Quarz 15 ein 4 MHz-Taktsignal für den Mikrocontroller 16. Die von der Teilgruppe 6 bis 10 erzeugte Gleichspannung wird an Anschluss 20 für positive Versorgungsspannung angelegt. Anschluss 21 für Masse (GND) wird mit Masse verbunden. Über die Ausgänge 22 zum Treiben von Display und Display-Versorgungsspannung des Mikrocontrollers 16 wird ein Display 26 (entsprechend 10 nach FIG 1) angesteuert, wobei der Mikrocontroller 16 nicht nur die Daten zur Anzeige der Zahlenwerte ausgibt, sondern über einen seiner Ausgänge 22 auch die Versorgungsspannung für das Display 26 liefert. Die Ausgänge 22 des Mikrocontrollers 16 sind dazu über Verbindungsleitungen 23 mit der Anschlussbuchse 24 (entsprechend 8 nach FIG 1) verbunden. Durch Aufstecken des zugehörigen Steckers 25 (entsprechend 9 nach FIG 1) für die Visualisierung der Daten auf dem Display 26 können die Daten der ermittelten Laufleistung und gegebenenfalls der Motorumdrehungen bei laufendem Motor jeweils ohne zusätzliche Versorgungsspannung abgelesen werden.

FIG 1 zeigt ein Ausführungsbeispiel für die Integration der Schaltungsanordnung in einen Motorblock, bei der die Bauteile 2 bis 8 so in eine Öffnung des Motorblocks eingefügt werden, dass weder ihre Entfernung noch ihre Manipulation von außen möglich sind. Die Wärmeisolation 2 erfüllt den Zweck, die Bauteile 3 bis 8 gegenüber den Temperaturen des Motorblocks 1 und den im Motorblock 1 herrschenden Temperaturen zu isolieren. Der Wärmeleiter 4 erfüllt den Zweck, die die Wärmeisolation 2 durchdringende restliche Wärme sowie die geringe von der Schaltplatine 3 (entsprechend 5 bis 22 nach FIG 2) erzeugte Wärme aus dem Motorblock 1 heraus abzuführen und über die besondere Ausformung des Wärmeleiters als Kühlrippen 7 an die Umgebung abzugeben. Der Kabelkanal zur Induktionsspule 6 verbindet in diesem Ausführungsbeispiel die Schaltung mit der Induktionsspule. Bei anderen Ausführungsformen, bei denen der jeweilige Verbrennungsmotor eine direkte Verbindung der Induktionsspule mit der Schaltungsanordnung ermöglicht, entfällt der Kabelkanal zur Induktionsspule 6. Der Kabelkanal zur Anschlussbuchse 5 stellt die Verbindung der Schaltplatine 3 mit der Anschlussbuchse 8 für den Stecker zum Display dar. Der Stecker 9 verbindet Display 10 mit der Anschlussbuchse 8 zur Visualisierung der ermittelten Daten.

Weiterbildungen der Erfindung sind Gegenstand der Unteransprüche.

Selbstverständlich können die Ausführungsformen und Maße von den vorstehenden Darstellungen in den Zeichnungen abweichen, ebenso wie, je nach Motor, der Ort der Platzierung der Schaltungsanordnung in den Motorblock.

## Patentansprüche

1. Verfahren zur innerhalb eines Motorblocks (Fig 1, 1) eines Verbrennungsmotors erfolgenden Ermittlung und Aufzeichnung der Laufleistung des Verbrennungsmotors hinsichtlich seiner gesamten Betriebsdauer und der über die Gesamtmotorlaufzeit gemessenen Motorumdrehungen für eine gleichzeitige Motorverschleißermittlung mit von außerhalb des Motorblocks (Fig 1, 1) unabhängiger Energieversorgung zur Gewährleistung der Manipulationssicherheit des Laufleistungszählers und zur Anzeige der Laufleistung und der Motorumdrehungen über ein externes Display (Fig 1, 10), **gekennzeichnet durch**
die Anordnung einer Schaltplatine (Fig 1, 3) zur Ermittlung der Laufleistung und der über die Gesamtmotorlaufzeit gemessenen Motorumdrehungen des Verbrennungsmotors innerhalb des Motorblocks (Fig 1, 1), wobei die von außen unzugängliche Schaltplatine (Fig 1, 3) mit einem Mikrocontroller (Fig 2, 16) lediglich Ausgangssignale erzeugt,
die Verwendung einer Kühlvorrichtung (Fig 1, 2,4,7) aus wärmeleitenden (Fig 1, 4) bzw. wärmeisolierenden Materialien (Fig 1, 2), welche die Schaltplatine einerseits vom Motorblock und andererseits von den sich im Motorblock befindlichen Flüssigkeiten und Gasen thermisch isolieren und welche die die Isolierung durchdringende Wärme an die Umgebung des Motorblocks abführen, und
das Anordnen von auf der Kurbelwelle (Fig 2, 1) rotierenden Permanentmagneten (Fig 2, 3), welche in einer in ihrer Nähe anzubringenden Induktionsspule (Fig 2, 4) die Versorgungsspannung und zugleich die Information über die Drehzahl des Motors für die Schaltplatine (Fig 1, 3) generieren, und
das Einbauen einer von außen zugänglichen Anschlussbuchse (Fig 1, 8), über die das externe Display (Fig 1, 10) zur Visualisierung der ermittelten Daten **durch** die Schaltplatine (Fig 1, 3) angesteuert werden kann.

2. Schaltungsanordnung zur Ermittlung und Aufzeichnung der Laufleistung eines Verbrennungsmotors, welche
einen induktiven Sensor (Fig 2, 2,3) und
eine Gleichrichterdiode (Fig 2, 5) zur Umwandlung der von einer Induktionsspule (Fig 2, 4) erzeugten Wechselspannung in eine pulsierende Gleichspannung umfasst, wobei die pulsierende Gleichspannung einerseits als positive Versorgungsspannung für einen Mikrocontroller (Fig 2, 16) dient und andererseits für eine Teilgruppe elektronischer Bauteile (Fig 2, 11-14) zur Erzeugung eines in ein Rechtecksignal umwandelbaren, mit der Motordrehzahl gekoppelten Spannungsverlaufs und dessen Einspeisung in einen Schmitt-Trigger-Eingang (Fig 2, 17) des Mikrocontrollers (Fig 2, 16),
**dadurch gekennzeichnet, dass**
die Schaltungsanordnung in einen Motorblock (Fig 1, 1) integriert ist und Permanentmagnete (Fig 2, 3) auf der Kurbelwelle (Fig 2, 1) des Motors in der Nähe einer eine Wechselspannung motordrehzahlabhängiger Frequenz erzeugenden Induktionsspule (Fig 2, 4) angeordnet sind und ein mit den Oszillatoranschlüssen (Fig 2, 18,19) des Mikrocontrollers (Fig 2, 16) verbundener Quarz (Fig 2, 15), mit dessen Hilfe der Mikrocontroller (Fig 2, 16) ein internes, zeitkonstantes Taktsignal erzeugt, vorgesehen ist sowie
eine Isolierung (Fig 1, 2), die die Schaltplatine einerseits vom Motorblock (Fig 1, 1) und andererseits von den sich im Motorblock (Fig 1, 1) befindlichen Flüssigkeiten und Gasen thermisch isoliert,
und eine Kühlvorrichtung (Fig 1, 4,7), die die von der Schaltplatine (Fig 1, 3) erzeugte Wärme sowie die die Isolierung durchdringende Wärme an die Umgebung außerhalb des Motorblocks (Fig 1, 1) abführt, und außerdem ein externes Display (Fig 1, 10) vorgesehen ist, an das die durch die Ausgänge (Fig 2, 23) des Mikrocontrollers (Fig 2, 16) über die Verbindungsleitungen sowie die Kombination aus Anschlussbuchse (Fig 1, 8) und Stecker (Fig 1, 9) übermittelten Daten übertragen werden und auf dem diese Daten visualisierbar sind.

3. Verfahren nach Anspruch 1, **dadurch gekennzeichnet, dass** die Schaltplatine von einer vom Motorbetrieb unabhängigen Energiequelle gespeist wird, welche zusätzlich zur Induktionsspule Verwendung findet, wodurch die Visualisierung der Daten auch bei nicht laufendem Motor ermöglicht wird, oder welche diese ersetzt.

4. Schaltungsanordnung nach Anspruch 2, **dadurch gekennzeichnet, dass** im Mikrocontroller der Schaltplatine eine unverwechselbare und dem jeweiligen Motor eindeutig zuordenbare Identifikationsnummer gespeichert ist, welche zusammen mit den ermittelten Messdaten auf dem Display visualisiert werden kann.

5. Schaltungsanordnung nach Anspruch 2, **dadurch gekennzeichnet, dass** die Induktionsspule auf der Schaltplatine angeordnet ist, unter der Bedingung, dass die Schaltplatine so nah an der Kurbelwelle angeordnet wird, dass die Permanentmagneten in der Induktionsspule eine zum Betrieb der Schaltplatine ausreichende Spannung erzeugen.

6. Schaltungsanordnung nach Anspruch 2, **dadurch gekennzeichnet, dass** die Permanentmagneten (Fig 2, 3) Teil einer auf der Kurbelwelle (Fig 2, 1) angeordneten Erregerscheibe (Fig 2, 2) sind.

7. Schaltungsanordnung nach Anspruch 2, **dadurch gekennzeichnet, dass** der Mikrocontroller neben der Gesamtbetriebsdauer des Motors und der über die Gesamtlaufzeit des Motors gemessenen Motorumdrehungen auch die aktuelle Drehzahl des Motors über das Display visualisiert und somit zusätzlich die Funktion eines Drehzahlmessers erfüllt.

8. Schaltungsanordnung nach Anspruch 2, **dadurch gekennzeichnet, dass** der Mikrocontroller neben der Gesamtbetriebsdauer des Motors und der über die Gesamtlaufzeit des Motors gemessenen Motorumdrehungen über Messfühler auch zusätzliche, innerhalb des Motorblocks ermittelbare Messdaten erfasst, wie Ölstand, Öltemperatur und Ölqualität, und die ermittelten Messwerte im Display visualisiert.

## Claims

1. Process for determining and recording, within an engine block (Fig 1, 1) of an internal combustion engine, the running time of the internal combustion engine with regard to its total running time and to the engine revolutions measured over the total running time of the engine for simultaneously determining the wear and tear of the engine, with a self-energetized power supply being independent of any power sources located outside the engine block (Fig 1, 1) in order to ensure that the running time counter is tamper-proof and to visualize the running time and the engine revolutions on an external display (Fig 1, 10), **characterized by**
arranging a circuit board (Fig 1, 3) inside the engine block (Fig 1, 1) for determining the running time of the internal combustion engine and its revolutions measured over the total running time of the engine, with the circuit board (Fig 1, 3) which is inaccessible from the outside only generating output signals with a micro-controller (Fig 2, 16), and by
using a cooling mechanism (Fig 1, 2,4,7) consisting of heat conducting (Fig 1, 4)and heat insulating materials (Fig 1, 2) thermally insulating the circuit board both from the engine block and from the liquids and gases existing inside the engine block, and dissipating the heat generated by the circuit board as well as the heat penetrating through the insulation to the outside of the engine block, and by
arranging permanent magnets (Fig 2, 3) rotating on the crankshaft (Fig 2, 1) which generate the power supply for the circuit board (Fig 1, 3) in an inductor coil (Fig 2, 4) to be affixed close to them and, at the same time, generate the information on the engine revolutions for the circuit board, and by
installing a connection socket (Fig 1, 8) which is accessible from the outside and by means of which the external display (Fig 1, 10) for visualising the data ascertained can be triggered by the circuit board (Fig 1, 3).

2. Circuit arrangement for determining and recording the running time of an internal combustion engine, comprising an inductive sensor (Fig 2, 2,3) and a rectifier diode (Fig 2, 5) for conversion of the alternating voltage generated by an inductor coil (Fig 2, 4) into a pulsating direct voltage, with the pulsating direct voltage serving, on the one hand, as a positive supply voltage for a micro-controller (Fig 2, 16) and, on the other hand, for a subgroup of electronic components (Fig 2, 11-14) in order to generate a voltage curve, that is coupled to the engine speed and is convertible into a rectangular signal, and in order to supply it to a Schmitt trigger input (Fig 2, 17) of the micro-controller (Fig 2, 16),
**characterized by**
integrating the circuit arrangement in an engine block (Fig 1, 1) and arranging permanent magnets (Fig 2, 3) on the crankshaft (Fig 2, 1) of the engine which is close to an inductor coil (Fig 2, 4) generating an alternating voltage of an engine speed-dependent frequency, and by providing for a crystal (Fig 2, 15) which is linked to the oscillator connections (Fig 2, 18,19) of the micro-controller (Fig 2, 16) and assists the micro-controller (Fig 2, 16) in generating an internal time-constant clock pulse, as well as by
using an insulation (Fig 1, 2) thermally insulating the circuit board both from the engine block (Fig 1, 1) and from the liquids and gases existing inside the engine block (Fig 1, 1), and by
using a cooling mechanism (Fig 1, 4,7) dissipating the heat generated by the circuit board (Fig 1, 3) as well as the heat penetrating through the insulation to the outside of the engine block (Fig 1, 1), and, moreover, by providing for an external display (Fig 1, 10) for receiving and visualizing the data transmitted through the outputs (Fig 2, 23) of the micro-controller (Fig 2, 16) via the connection lines as well as the combination of socket (Fig 1, 8) and plug (Fig 1, 9).

3. Process according to claim 1, **characterized in that** the circuit board is supplied with power from an energy source that is independent of the engine operation and that is either used in addition to the inductor coil, thus allowing a data visualization even if the engine is not running, or is used in replacement of it.

4. Circuit arrangement according to claim 2, **characterized in that** an unmistakable identification number which is unambiguously assignable to the respective engine is saved in the micro-controller of the circuit board and can be visualized on the display together with the measuring data ascertained.

5. Circuit arrangement according to claim 2, **characterized in that** the inductor coil is arranged directly on the circuit board, on the condition that the circuit board is arranged near enough to the crankshaft to allow the permanent magnets to generate a sufficient voltage in the inductor coil in order to operate the circuit board.

6. Circuit arrangement according to claim 2, **characterized in that** the permanent magnets (Fig. 2, 3) form part of an exciter disc (Fig. 2, 2) arranged on the crankshaft (Fig 2, 1).

7. Circuit arrangement according to claim 2, **characterized in that** the micro-controller does not only visualize the total running time of the engine and the engine revolutions measured over the total running time of the engine but also the current engine revolutions on the display and thus fulfils the additional function of a revolution meter.

8. Circuit arrangement according to claim 2, **characterized in that** the micro-controller does not only record the total running time of the engine and the engine revolutions measured over the total running time of the engine but also additional measuring data ascertainable within the engine block by means of sensors, such as oil level, oil temperature and oil quality, and visualizes the measured values ascertained on the display.

## Revendications

1. Procédé pour déterminer et enregistrer, au-dedans d'un bloc-moteur (Fig 1, 1) d'un moteur à combustion interne, la durée de marche d'un moteur à combustion interne portant sur sa durée totale de marche ainsi que le nombre total de tours du moteur mesurés à travers la durée totale de marche du moteur dans le but de déterminer simultanément l'usure du moteur, avec une autoalimentation en énergie, autarcique des sources énergétiques en dehors du bloc-moteur (Fig 1, 1), afin d'assurer la non-manipulabilité du compteur kilométrique et totalisateur de la durée de marche et de visualiser la durée de marche et le nombre de tours du moteur sur un afficheur externe (Fig 1, 10), **caractérisé par**
l'installation d'une carte montage (Fig 1, 3) au-dedans du bloc- moteur (Fig 1, 1) pour déterminer la durée de marche du moteur à combustion interne et le nombre de tours mesurés à travers la durée totale de marche du moteur, avec la carte montage (Fig 1, 3) qui est inaccessible du dehors ne générant que des signaux de sortie moyennant un microcontrôleur (Fig 2, 16), et par
l'utilisation d'un mécanisme de refroidissement (Fig 1, 2,4,7) composé des matériaux conducteurs de la chaleur (Fig 1, 4) et calorifuges (Fig 1, 2) isolant la carte montage thermiquement d'une part du bloc-moteur et d'autre part des fluides et gaz existants dans le bloc-moteur, et dissipant la chaleur produite par la carte montage et la chaleur pénétrant l'isolement vers le dehors du bloc-moteur, et par
l'installation d'aimants permanents (Fig 2, 3) en rotation sur le vilebrequin (Fig 2, 1) qui génèrent, dans une bobine d'induction à fixer en proximité de ceux-ci, la tension d'alimentation pour la carte montage (Fig 1, 3) et, en même temps, l'information concernant les tours du moteur pour la carte montage, et par
la mise en place d'une boîte de jonction (Fig 1, 8) qui est accessible du dehors et à travers laquelle l'afficheur externe (Fig 1, 10) peut être excité par la carte montage (Fig 1, 3) pour visualiser les données déterminées.

2. Montage pour déterminer et enregistrer la durée de marche d'un moteur à combustion interne, comprenant un capteur inductif (Fig 2, 2,3) et une diode de redressement (Fig 2, 5) pour la conversion de la tension alternative générée par une bobine d'induction (Fig 2, 4) en une tension continue en pulsation, avec la tension continue en pulsation servant, d'une part, comme tension d'alimentation positive pour un microcontrôleur (Fig 2, 16) et, d'autre part, pour un sous-groupe de composants électroniques (Fig 2, 11-14) dans le but de générer une courbe de tension accouplée à la vitesse du moteur et convertissable en un signal rectangulaire et dans le but de l'alimenter dans une entrée trigger de Schmitt (Fig 2, 17) du microcontrôleur (2, 16),
**caractérisé par** l'intégration du montage dans un bloc-moteur (Fig 1, 1) et l'installation d'aimants permanents (Fig 2, 3) sur le vilebrequin (Fig 2, 1) du moteur proche d'une bobine d'induction (Fig 2, 4) qui génère une tension alternative d'une fréquence dépendant de la vitesse du moteur, et par prévoir un cristal (Fig 2, 15) connecté aux raccords de l'oscillateur (Fig 2, 18,19) du microcontrôleur (Fig 2, 16) à l'aide duquel le microcontrôleur (Fig 2, 16) génère un signal d'horloge interne constant à travers le temps, ainsi que par l'utilisation d'un isolement (Fig 1, 2) thermiquement isolant la carte montage d'une part du bloc-moteur (Fig 1, 1) et d'autre part des fluides et gaz existants dans le bloc-moteur (Fig 1, 1), et par
un mécanisme de refroidissement (Fig 1, 4,7) dissipant la chaleur produite par la carte montage (Fig 1, 3) et la chaleur pénétrant l'isolement vers le dehors du bloc-moteur (Fig 1, 1) et en outre par
un afficheur externe (Fig 1, 10) pour recevoir et visualiser les données transmises à travers les sorties (Fig 2, 23) du microcontrôleur (Fig 2, 16) via les lignes de raccordement ainsi que la combinaison consistant en une boîte de jonction (Fig 1, 8) et un connecteur (Fig 1, 9).

3. Procédé selon la revendication 1, **caractérisé en ce que** la carte montage est alimentée d'une source énergétique indépendante de la marche du moteur qui est soit utilisée en plus de la bobine d'induction, ainsi permettant une visualisation des données même si le moteur ne marche pas, soit utilisée en remplacement de celle-ci.

4. Montage selon la revendication 2, **caractérisé en ce qu'**un numéro d'identification indubitable et attribuable, sans ambiguïté, au moteur respectif est mémorisé dans le microcontrôleur de la carte montage, un numéro qui peut être visualisé sur l'afficheur conjointement avec les données mesurées déterminées.

5. Montage selon la revendication 2, **caractérisé en ce que** la bobine d'induction est mise en place directement sur la carte montage, à condition que la carte montage soit placée aussi proche au vilebrequin que les aimants permanents génèrent dans la bobine d'induction une tension suffisante pour opérer la carte montage.

6. Montage selon la revendication 2, **caractérisé en ce que** les aimants permanents (Fig 2, 3) font partie d'un disque excitateur (Fig 2, 2) monté sur le vilebrequin (Fig 2, 1).

7. Montage selon la revendication 2, **caractérisé en ce que** le microcontrôleur visualise sur l'afficheur non seulement la durée totale de marche du moteur et les tours du moteur mesurés à travers la durée totale de marche du moteur, mais aussi les tours actuels du moteur, ainsi remplissant la fonction supplémentaire d'un compte-tours.

8. Montage selon la revendication 2, **caractérisé en ce que** le microcontrôleur enregistre non seulement la durée totale de marche du moteur et les tours du moteur mesurés à travers la durée totale de marche du moteur, mais aussi des données de mesure supplémentaires, déterminables au-dedans du bloc-moteur, comme le niveau d'huile, la température d'huile et la qualité d'huile, et visualise les valeurs de mesure déterminées sur l'afficheur.
